# EUROPEAN PATENT APPLICATION

(11) **EP 4 779 438 A1**
(43) Date of publication of application: **22.07.2026**
(21) Application number: 26153312.9
(22) Date of filing: 21.01.2026
(51) Int. Cl.: G06F 1/185

(54) **BRACKET ASSEMBLY FOR EXPANSION CARD**

(30) Priority: 21.01.2025 US 202563747863 P; 18.04.2025 US 202519183445
(71) Applicant: Aivres Systems Inc., San Jose, CA 95133 (US)
(72) Inventor: Lu, Heng, New Taipei City (TW)
(74) Representative: Ostertag & Partner Patentanwälte mbB

(57) **Abstract**

A bracket assembly for installing and disconnecting an expansion card to an expansion socket slot in a computer system is arranged as a mechanical linkage for the transfer and conversion of motion forces to facilitate operation. The bracket assembly includes a card beam attached along an upper card edge, an eccentric rotor connected to the first beam end, and a lever handle pivotally attached to a second beam end. A sliding link connects the eccentric rotor and lever handle so that pivoting the lever handle rotates the eccentric rotor.

## Description

### TECHNICAL FIELD

This patent application relates to components for computing systems and, in particular, to a bracket structure for electrically and mechanically connecting the internal computer devices and components together.

### BACKGROUND

Many computer systems, and particularly servers communicatively connected to a computer network to provide functionality and resources for other systems, are modularly designed for flexibility and scalability. For example, various computer components can be added or swapped to improve or change the functionality and capabilities of the computer system. A common design for modular computer systems is to include one or more expansion sockets located on a printed circuit board such as the motherboard or a dedicated expansion board accommodated internally inside a system chassis or server chassis. To modify or improve the computer system, additional circuit boards with the appropriate electronic components mounted thereon can be inserted and electrically connected to the connector sockets to communicate and interact with the computer components previously included with the computer system. The new combination expands the functionality of the computer system.

The added circuit boards are typically configured as planar printed circuit cards referred to as expansion cards or riser cards, and the expansion sockets are configured as elongated edge connectors including a slot to receive an edge of the expansion card. Riser cards, for example, are often oriented vertically so the cards can be placed into the edge connector sockets in an upright configuration, perpendicular to a horizontally positioned expansion board or motherboard.

To support the expansion cards that are received in the expansion slots or edge connectors, support structures can be included that mechanically attach the expansion cards to the expansion board. The mechanical support structures may involve threaded fasteners, which complicates assembly due to the spatial constraints inside the chassis. Further, in some embodiments, the expansion cards may include different connection configurations that require the cards to be forcibly inserted into the expansion slots to establish a secure connection.

### SUMMARY OF THE DISCLOSURE

To install an expansion card into an expansion socket slot in a computer system, the disclosure provides a bracket assembly that can align and connect an expansion card, also referred to as a riser card, to an expansion socket slot, which may be configured as an edge connector. The bracket assembly includes an elongated card beam that can be joined to and extends along an upper card edge of the expansion card. An eccentric rotor is rotatably connected to a first beam end of the card beam and can rotate with respect to fixed support structure of the computer chassis. Rotation of the eccentric rotor lowers the expansion card with respect to the expansion socket slot and can apply a vertical force to the support structure to remove the expansion card from the expansion socket slot.

The bracket assembly also includes lever handle pivotally connected to a second beam end of the card beam. To operatively connect the eccentric rotor and the lever handle, the bracket assembly can include a sliding link that coextends with respect to the card beam. The sliding link is connected to the eccentric rotor by a first transfer joint and to the lever handle by a second transfer joint. The first and second transfer joints may be configured to convert forces and motion to change the pivotal movement of the lever handle to rotational motion of the eccentric rotor, and vice versa, so that a force applied to the lever handle is able to actuate the eccentric rotor.

In another aspect, the eccentric rotor is connected to the first beam end by a first rotational joint and is connected to the first link end by a first transfer joint.

In another aspect, the first transfer joint is offset from the first rotational joint.

In another aspect, the first rotational joint is a pin joint and the first transfer joint is a pin-in-slot joint.

In another aspect, the lever handle is connected to the second beam end by a second rotational joint and is connected to the second link end by a second transfer joint.

In another aspect, the second transfer joint is offset from the second rotational joint.

In another aspect, the second rotational joint is a pin joint and the second transfer joint is a pin-in-slot joint.

In another aspect, the card beam and the sliding link are connected by one or more prismatic sliding joints.

In another aspect, the prismatic sliding joint comprises a longitudinal slot on one of the card beam and the sliding link that receives a sliding peg on the other of the card beam and the sliding link.

In another aspect, the eccentric rotor comprises a projecting finger adapted for sliding contact with a fixed support structure of the computer chassis.

In another aspect, the lever handle comprises a camming structure adapted for engaging a fixed catch of the computer chassis to displace the bracket assembly in a vertical direction orthogonal to the longitudinal direction.

In another aspect, the camming structure is a bifurcated camming jaw.

In another aspect, the lever handle comprises a sliding latch adapted to releasably engage a latch channel on the card beam
The disclosure also provides a method of connecting and disconnecting an expansion card with an expansion socket slot in a computer system. The bracket assembly can be attached to the expansion card prior to installation into the computer system and may be assembled as an expansion card assembly. When the expansion card assembly is aligned with the expansion socket slot and, if included, the manifold ports of a fluid supply manifold, the lever handle can be pivoted to lower the expansion card in the vertical direction. For example, rotation of the eccentric rotor with respect to a fixed support structure lowers the lower card edge into the expansion socket slot. The lever handle may also include a camming structure that generates leverage against a camming catch to forcibly connect the fluid ports and manifold ports. To uninstall the expansion card assembly, the lever handle can be pivoted in the opposite direction.

In another aspect, the lever handle and the eccentric rotor are interconnected by a sliding link longitudinally coextending with the card beam.

In another aspect, the method further comprises lifting the lower card edge from the expansion socket slot by rotating the eccentric rotor with respect to the fixed support structure.

In another aspect, the method further comprises forcibly disconnecting the fluid port from the manifold port by pivoting the lever handle to disengage the camming structure with the camming catch.

The disclosure also provides a computer system, such as a server, that can be modified by the inclusion or removal of one or more expansion cards. The computer system includes a chassis defining an internal chassis volume. Located in the chassis volume can be an expansion board having a plurality of expansion socket slots and a fluid supply manifold having manifold ports for fluid connection with fluid ports on the expansion cards. An expansion card assembly can be connected and disconnected to one of the expansion socket slots by operation of an associated bracket assembly. For example, the bracket assembly can include an eccentric rotor that can be rotated relative to a fixed support structure on the chassis to vertically lower and raise the expansion card assembly. The eccentric rotor can be actuated by pivoting a lever handle. The lever handle may also be associated with a camming structure configured to generate leverage against a camming catch to forcibly connect and/or disconnect the fluid ports and manifold ports.

In a further aspect, the eccentric rotor comprises a projecting finger adapted for sliding contact with the fixed support structure of the computer chassis.

In a further aspect, the lever handle comprises a camming jaw adapted to engage a camming catch fixed in relation to the fluid supply manifold to produce a force in the vertical direction.

A possible advantage of the disclosed bracket assembly is that the combination of the eccentric rotor, lever handle, and sliding link provides a mechanism for the transfer and conversion of forces and motion to connect and/or disconnect the expansion card. For example, pivoting the lever handle can cause rotation of the eccentric rotor. Moreover, the forces are applied primarily in the vertical direction and avoids applying shearing loads, for example, in the longitudinal and/or lateral directions to the expansion socket slots and manifold ports. A related possible advantage is that the lever handle creates leverage and a mechanical advantage, reducing the input forces required to install and remove the expansion card assembly.

The individual aspects described above may be combined with one another unless clearly technically incompatible.

### BRIEF DESCRIPTION OF THE DRAWINGS

Figure 1 is a perspective view of a computer system such as server having a chassis accommodating internal computer components including a plurality of expansion cards connectable to corresponding edge connectors on an expansion board.
Figure 2 is a perspective view of a bracket assembly for installing and removing an expansion card with respect to an expansion card socket upon actuation of a lever handle.
Figure 3 is a perspective view of an elongated card beam configured as a structural channel extending between a first beam end and an opposite second beam end in a longitudinal direction.
Figure 4 is a perspective view of an elongated sliding link configured as a structural angle extending between a first link end and an opposite second link end in the longitudinal direction.
Figure 5 is perspective view of an eccentric rotor with an irregular profile configured to be rotatably connected to the first beam end by a first rotating joint.
Figure 6 is a perspective view of the latch handle configured to be pivotally connected with the second beam end and including a sliding latch and a camming structure.
Figure 7 is a perspective view of an edge shield attachable to the first beam end of the bracket assembly and to a forward card edge of the riser card.
Figure 8 is a perspective view of the bracket assembly being attached to the upper card edge of the expansion card to produce an expansion card assembly.
Figure 9 is a perspective view of a bridge connector being attached by a bridge connector bracket to the expansion card assembly.
Figure 10 is an elevational view of the bracketed card assembly being aligned with the expansion socket slot on the expansion board and the manifold ports on the fluid supply manifold.
Figure 11 is an elevational view of the bracketed card assembly vertically lowered to the expansion board by pivoting the lever handle to actuate the eccentric rotor.
Figure 12 is a detailed view of the eccentric rotor in sliding contact with respect to a fixed support structure of the chassis.
Figure 13 is a detailed view of the lever handle pivoting to engage a camming structure with a camming catch in a fixed relation to the fluid supply manifold to forcibly connect the fluid ports and manifold ports.

### DETAILED DESCRIPTION

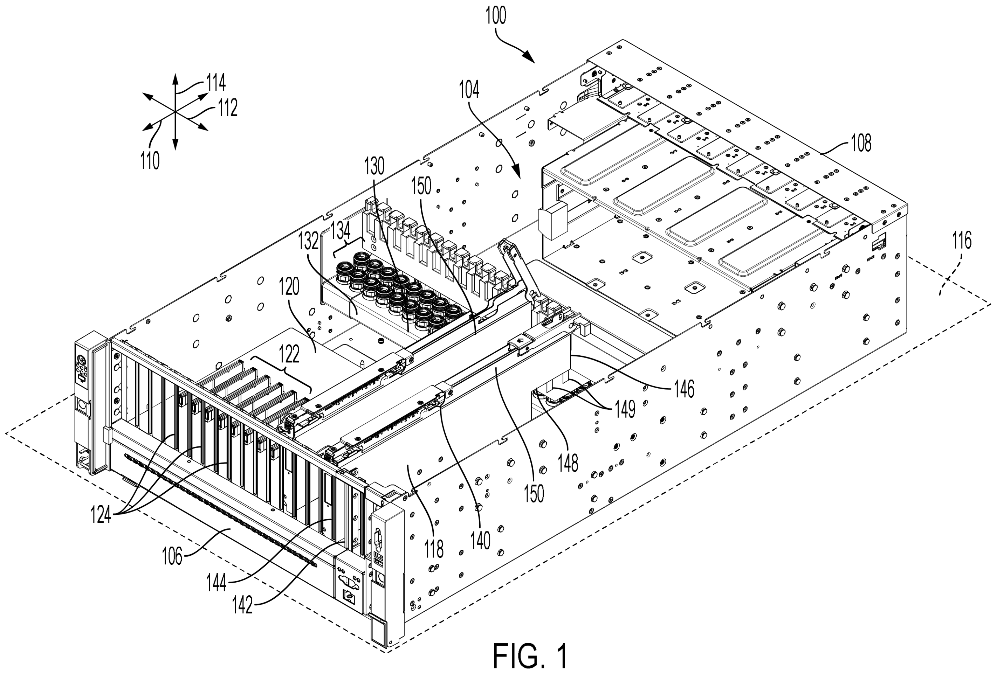

Now referring to the drawings, where whenever possible like reference numbers will refer to like elements, there is illustrated in FIG. 1 a computer system 100 comprised of various electronic devices and hardware that are cooperatively interconnected and assembled together and that may be accommodated in a common computer case or chassis 102. The chassis 102 can be a box-like structure made of formed sheet metal or molded plastic and that defines an internal space or chassis volume 104 for the internal computer components and electronic hardware of the computer system 100. The computer system 100 can be configured for communicative integration with a larger network or system and the chassis 102 may be designed for mounting into a rack with similar computer systems, although in other instances the computer system 100 may be a standalone configuration.

The chassis 102 can accommodate components and hardware devices like central processing units, memory modules, hard drives, power convertors, and fan units for circulating air internally about the chassis volume 104 for cooling of the internal components. The box-like chassis 102 may be rectangular in shape and can extend between a front panel 106 and rear panel 108 that are parallel to each other and located opposite one another with respect to a longitudinal direction 110 of the computer system 100. The front and rear panels 106, 108 can include various LED indicator lights, activation and setting buttons and switches, ports and sockets for data and power communications, and other features for interfacing with operators and other systems. In addition to the longitudinal direction 110, the chassis 102 can define and be oriented in reference to a lateral direction 112 that defines the width of the computer system 100 and a vertical direction 114 that perpendicularly intersects the longitudinal and lateral directions 110, 112. The longitudinal direction 110 and the lateral direction 112 may intersect at perpendicular angles and define a horizontal plane 116 for reference purposes.

To expand the functionality of the computer system 100, one or more expansion cards 118 can be selectively included when desired, and can be internally accommodated in the chassis volume 104. The expansion cards 118, also referred to as riser cards, adapter cards, PCI extension cards, and the like, may be planar circuit boards shaped and sized as quadrilateral cards having additional electronic devices mounted thereon. The mounted devices may be integrated circuits such as memory expansion modules, specialized processing units, communications and interface circuits, etc. In a specific example, the expansion card 118 can include one more graphics processing units (GPUs) that are designed for applications such as image processing, data analytics, artificial intelligence, and other high-performance computing applications.

To connect with the expansion cards 118, the computer system 100 can include an expansion board 120 located in the chassis volume 104 and fixed to the chassis 102. The expansion board 120 can also be a planar printed circuit board spatially supported parallel to the horizontal plane 116. The expansion board 120 can include a plurality of expansion socket slots 122 configured as edge connectors into which the expansion cards 118 may be plugged. The expansion socket slots 122 are configured as elongated slots aligned with the longitudinal direction 110. The expansion cards 118 can be inserted into the expansion socket slots 122, which may include spring loaded contacts that bias against corresponding conductive traces on the surfaces of the expansion card to established electronic communication between the components.

The plurality of elongated expansion socket slots 122 can be arranged in parallel to each other and laterally distributed in the lateral direction 112. To access the expansion cards 118, the chassis 102 can include a plurality of expansion bays 124 that are formed as openings in the forward panel 106 for example. The expansion bays 124 can be arranged along the lateral direction 112 and correspondingly aligned with respective expansion socket slots 122 on the expansion board 120. The openings associated with the expansion bays 124 enable the expansion cards 118 to form electrical connections with external cables, plugs, and the like. In the described arrangement, the expansion board 120 is located adjacent to the forward panel 106 of the chassis 102, although other spatial configurations and arrangements are possible.

In an embodiment, the expansion cards 118 can be designed to functionally interface with other subsystems and internal components of the computer system 100 in addition to the expansion board 120. For example, if the expansion card 118 is configured as a graphics processing unit ("GPU") or similar device, the electronic components mounted thereon may require additional cooling. The computer system 100 can be equipped with a fluid cooling system that includes a fluid supply manifold 130 configured to deliver a fluid such as cooling water to the plurality of expansion cards 118. The fluid supply manifold 130 can be part of a fluid circuit that circulates cooling water to the various internal components of the computer system 100 as part of a thermal management system.

The fluid supply manifold 130 can include a manifold block 132 that has an elongated shape and that is located in the chassis volume 104 aligned parallel to the lateral direction 112. The manifold block 132 can be located rearward, in the longitudinal direction 110, of the expansion board 120 and toward the rear panel 108. The laterally directed manifold block 132 therefore extends orthogonally across the plurality of expansion cards 118 that may be installed in the expansion socket slots 122 of the expansion board 120. The fluid supply manifold 130 can also include a plurality of manifold ports 134 that project upright from the manifold block 132 in the vertical direction 114 to connect with corresponding features on the expansion card 118.

In general, the expansion cards 118 can have a rectangular planar configuration including an upper card edge 140 and a parallel lower card edge 142 that is adapted to be inserted into the expansion socket slots 122 on the expansion board 120. The lower card edge 142 can be configured as an edge connector and may include a plurality of conductive traces that are exposed thereon to make electrical contact with corresponding conductive spring-loaded contacts in the connector socket slots 122 when the expansion board 120 is inserted and installed thereon. When the expansion board 118 is installed in the chassis 102, the upper and lower card edges 140, 142 are aligned parallel with the longitudinal direction 110 of the computer system 100. The expansion card 118 can include a forward card edge 144 and a parallel rearward card edge 146 that are orthogonal to the upper and lower card edges 140, 142 and that may be aligned in the vertical direction 114. When the expansion card 118 is assembled, the forward card edge 144 may be situated adjacently with respect to an expansion bay 124 of the front panel 106. Terms such as forward and rearward are used throughout the specification for reference purposes and form no limitation on the scope of the subject matter.

If the computer system 100 includes a fluid supply manifold 130, the expansion card 118 might include a recessed card edge 148 adapted to fit about the manifold block 132. The recessed card edge 148 can be located perpendicular to the rearward card edge 146 and parallel to and vertically spaced from the lower card edge 142 to produce a notch in the expansion board 118. When the expansion card 118 is connected to the expansion board 120, the notch associated with the recessed card edge 148 aligns with and receives the manifold block 132. To fluidly connect with the manifold ports 134 on the fluid supply manifold, the expansion card 118 can include one or more corresponding fluid ports 149 projecting downwardly in the vertical direction 114 from the recessed card edge 148. In the illustrated example, two fluid ports 149 can be included on the expansion card 118 to intake and discharge cooling water as appropriate.

To facilitate connecting the expansion card 118 to the expansion board 120 in a secure manner, each expansion card can be operatively associated with a bracket assembly 150. The bracket assembly 150 can be attached along the upper card edge 140 of the expansion card 118 to align the card upright in the vertical direction 114 and longitudinally in the longitudinal direction 110 with respect to the expansion socket slot 122. If the computer system 100 includes a fluid supply manifold 130, the bracket assembly 150 can be mechanically configured to produce a positive installation force in the vertical direction 114 that can forcibly connects the fluid ports 149 located along the recessed card edge 148 to the manifold port 134 on the manifold bock 132. Furthermore, the bracket assembly 150 can be configured to mechanically eject the expansion card 118 from the edge connector sockets 122 to facilitate removal and swapping of expansion cards and components.

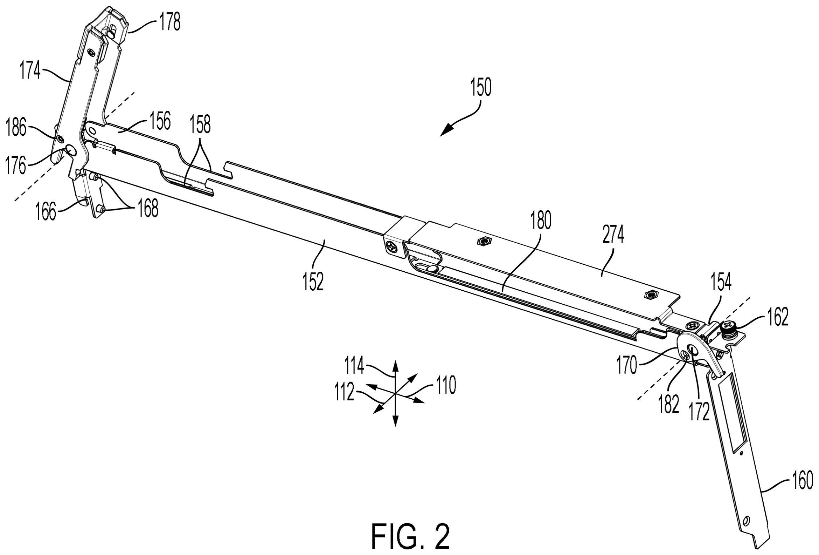

Referring to FIG. 2, there is illustrated an example of the bracket assembly 150 that can be assembled from a plurality of rigid structural components to fixedly secure the expansion card with respect to the expansion board or the like. For rigidity and strength, many of the structural components of the bracket assembly 150 can be made of metal or steel sheet material that is formed into the desired shapes and geometry by pressing and stamping operations. The metal components may be plated or galvanized for corrosion protection. Injection molded thermoplastics is another example of a suitable material for the components of the bracket assembly 150.

The bracket assembly 150 can have a spatial extension that aligns primarily in the longitudinal direction 110 when installed. To produce the longitudinal extension, the bracket assembly 150 can include an elongated card beam 152 that extends between a first beam end 154 and a longitudinally opposite second beam end 156 and that is adapted to attach along the upper edge of the expansion card. The rigid elongated card beam 152 is adapted to receive and transfer structural loads and applied forces to facilitate installation and/or removal of the expansion card with respect to the computer system. The card beam 152 can be configured as a structural C-channel and can include a pair of latch channels 158 aligned in the longitudinal direction 110 located proximately toward the second beam end 156.

To secure the bracket assembly 150 to the expansion card, the card beam 152 can be structurally attached to an edge bracket or an edge shield 160 that extends in the vertical direction 114 perpendicularly from the first beam end 154. The edge shield 160 can be a stamped metal component having a vertical height corresponding to expansion card and that is dimensioned in the vertical direction 114 to extend generally coextensive with one of the first or second side edges of the expansion card. The edge shield 160 can also be geometrically configured for placement with respect to one of the expansion bays in the front panel of the computer chassis. To secure the edge shield 160 with the computer chassis and align the expansion card with the expansion bay, a securing fastener 162, which may be embodied as a thumb screw or a similar fastening mechanism, can be located on the upper end of the edge shield and oriented in the vertical direction 114

To secure the longitudinally opposite end of the bracket assembly 150, the second beam end 156 can include an extension leg 166 that extends in the vertical direction 114 perpendicular from the elongated card beam 152. The extension leg 166 can be integrally joined to the card beam 152 or may be a separate structure that is attached to the second beam end 156. The extension leg 166 can be adapted to slidingly abut against an opposite forward or rearward card edge of the expansion card when the card beam 152 is attached thereto. Located in the extension leg 166 can be one or more fastener apertures 168 that are adapted to receive and align threaded fasteners in the longitudinal direction 110.

To mechanically actuate the bracket assembly 150 by redirecting, transferring and applying forces during installation and removal of the expansion cards, the bracket assembly 150 includes various actuating components and structures. For example, to assist in installing and/or removing the expansion card with respect to the expansion socket slots and the expansion bays, the bracket assembly 150 can include an eccentric rotor 170 that is rotationally attached to the first beam end 154 of the card beam 152. The eccentric rotor 170 can be geometrically shaped to make sliding contact with a corresponding support structure of the chassis to cause a responsive movement of the bracket assembly 150 fixedly attached to the expansion card. To enable rotation, the eccentric rotor 170 can be connected by a first rotational joint 172 that may be embodied as a pin joint or revolute joint having a rotational axis in the lateral direction 112, perpendicularly transverse to the longitudinal direction 110.

To cause rotation of the eccentric rotor 170, a lever handle 174 can be pivotally connected to the second beam end 156 of the card beam 152. For example, a fixed end of the lever handle 174 can be joined to the second beam end 156 by a second rotational joint 176, which may also be embodied as a pin joint or revolute joint having a rotation axis aligned in the lateral direction 112. The lever handle 174 can be elongated so that a force applied to the free end causes the lever handle to pivot and swing with respect to the card beam 152. The lever handle 174 can thus be pivoted into parallel and adjacent alignment with the card beam 152 in the longitudinal direction 110 and can swing apart there from in the vertical direction 114.

In an embodiment, to releasably secure the pivoting lever handle 174 parallel and adjacent to the card beam 152 in the longitudinal direction 110, the lever handle can include a sliding latch 178 located at the free end thereof. The sliding latch 178 can be moved toward or away from the fixed end of the lever handle 174 that is pivotally joined to the second beam end 156. The sliding latch 178 can operatively interact with the latch channels 158 disposed on the card beam 152 to secure and release the lever handle 174.

To convert and transfer the movement and force applied to the lever handle 174 to the eccentric rotor 170, an elongated sliding link 180 can operatively connect and extend between the components. The sliding link 180 can be an elongated bar of rigid material, such as metal or plastic, for the application and transfer of motion and force. For example, to rotate the eccentric rotor 170, the sliding link 180 can be operatively connected thereto by a first transfer joint 182 that allows for movement in multiple directions and provides multiple degrees of freedom.

The transfer joint may be adapted to allow both linear or translation motion in a straight or curved and rotational motion about rotational axis. The transfer joint may also be referred to as a multiaxial joint or multidirectional joint and can reversibly convert between translation or linear forces and motions and rotational motions and forces.

In an embodiment, the first transfer joint 182 can be configured as a pin-in-slot joint or a scotch yoke mechanism. To move in response to pivotal movement of the lever handle 174, the sliding link 180 can be operatively connected thereto by a second transfer joint 186 that may also be configured as a pin-in-slot joint or a scotch yoke mechanism. To align and slide with respect to the longitudinal direction 110, the sliding link 180 can be physically accommodated by the card beam 152. The card beam 152 and the sliding link can be generally coextensive and slidingly connected parallel to each other in the longitudinal direction.

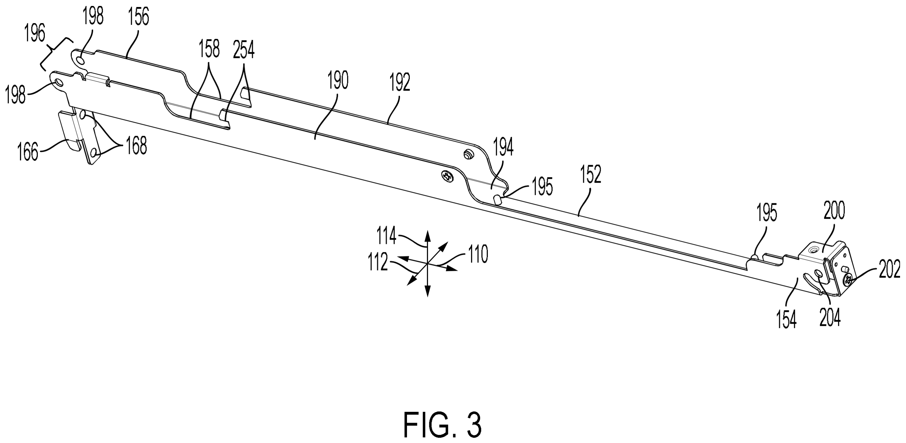

Referring to FIG. 3, there is shown an example of the card beam 152 that may be structurally configured to accommodate the sliding link and the linear motion of the components in the longitudinal direction 110. For example, a portion of the elongated card beam 152 longitudinally proximate to the second beam end 154 can be configured as a channel structure having a pair of parallel, spaced apart channel flanges 190, 192 oriented in the vertical direction 114 and joined by a channel web 194 planarly oriented in the longitudinal direction 110. The channel flanges 190, 192 can terminate approximately mid length of the card beam 152 in the longitudinal direction 110 and the channel web 194 may extend to the first beam end 154.

The three-sided channel structure of the card beam 152 can function to organize and guide electrical cables communicating power or data signals to the expansion card with respect to the longitudinal direction 110 of the card beam 152. The cables can be constrained and protected between the parallel upright channel flanges 190, 192.

To connect with the sliding link, a plurality of sliding pegs 195, spaced apart in the longitudinal direction 110, can be formed along the channel web 194. The sliding pegs 195 can be cylindrical structures having diameters smaller than the lateral width of the channel web 194 and that project upright in the vertical direction 114. The sliding pegs 195 can be metal rivets or pins fastened or attached to the channel web 194.

The pair of latch channels 158 can be disposed as slots into the respective pairs of the channel flanges 190, 192. The extension leg 166 can be attached to and descend in the vertical direction 114 downwardly from longitudinal end of the channel web 194. To connect with the lever handle and establish the second rotational joint, the second beam end 156 can include a bifurcated fork 196 with parallel projecting prongs in the longitudinal direction 110 that have pin apertures 198 disposed therein that are aligned with the linear direction 112.

The first beam end 154 can be configured as a box frame 200 comprised as a multisided box-like structure. The sides of the box frame 200 can include one or more fastener apertures 202 disposed therein to accommodate threaded fasteners for connecting with, for example, the edge shield. To connect with the eccentric rotor and establish the first rotational joint, the lateral opposed sides of the box frame 200 can include a pair of aligned pin apertures 204 that are axially arranged in the lateral direction 112.

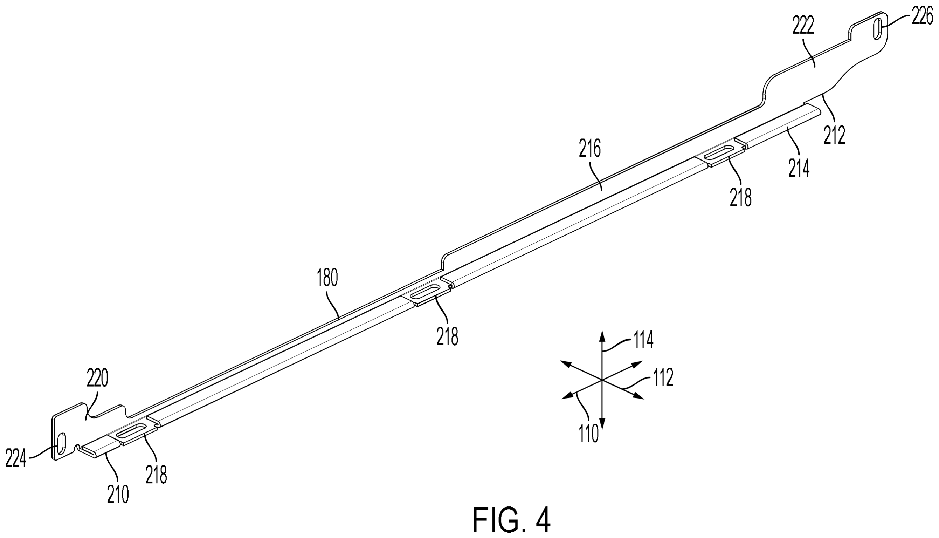

Referring to Fig. 4, there is shown an example of the sliding link 180 that can be accommodated in the card beam. The elongated sliding link 180 can extend in the longitudinal direction 110 between a first link end 210 and a longitudinally opposite second link end 212. Geometrically, the elongated sliding link 180 can be configured as an angle structure including a horizontal first angle leg 214 and a vertical second angle leg 216. To slidingly attach to the card beam, the horizontal first angle leg 214 can include one or more longitudinal slots 218 that are disposed therein and that are spaced apart in the longitudinal direction 110. The longitudinal slots 218 can each have an oval shape and are adapted to make a sliding connection with a corresponding sliding peg located on the elongated card beam. The longitudinal slots 218 can therefore form a linear or prismatic joint that enables sliding motion or translation of the sliding link 180 with respect to the longitudinal direction 110. The prismatic sliding joint can be characterized by enabling a single degree of translating or linear motion. In a possible variation, the longitudinal slots can be formed on the card beam and the sliding pegs can be formed on the sliding link.

The vertical second angle leg 216 is discontinuous with respect to the length of the elongated sliding link 180 and includes a first leg flat 220 projecting from the first link end 210 and a second leg flat 222 partly projecting from the longitudinally opposite second link end 212. To establish the first transfer joint, the first leg flat 220 can include a first oblong slot 224 disposed therein that is oval shaped and oriented in the vertical direction 114. The first oblong slot 224 is configured to receive and allow for linear movement of a round peg or lug fixed to the eccentric rotor, and thus establishes a pin-in-slot joint allowing for translation and rotation. Similarly, to establish the second transfer joint with the lever handle, the second leg flat 224 can also include an oval shaped second oblong slot 226 oriented in the vertical direction 114. The second oblong slot 226 can also receive and allow linear or translating motion and/or rotational motion of a rounded peg or lug on the lever handle to establish another pin-in-slot joint.

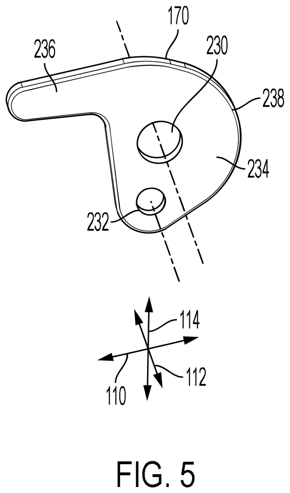

Referring to FIG. 5, there is shown an example of the eccentric rotor 170 that is configured to jointly connect with both the card beam and the sliding link in a manner that redirects and converts between linear motion and rotation. For example, the eccentric rotor 170 can be a flat disc of stamped metal or molded plastic having a central pin aperture 230 into which a cylindrical pin on the second beam end can be inserted via a clearance fit. The eccentric rotor 170 can therefore rotate around the pin received in the central pin aperture 230 establishing an axis of rotation parallel with the lateral direction 112.

The eccentric rotor 170 also can include an offset pin aperture 232 that is located in an offset relation to the central pin aperture 230. The offset pin aperture 232 may also be circular and configured to receive and form an interference fit with a cylindrical pin oriented in the lateral direction 112. In operation, the pin joined to the eccentric pin aperture 232 will also be slidingly received the first oblong slot in the first link end described in Figure 4. Due to the offset relation between the central pin aperture 230 and the offset pin aperture 232, a force applied to the offset pin aperture 232 is not linearly aligned with the central pin aperture 230 and thus creates a moment tending to rotate the eccentric rotor 170 about the central pin aperture 230.

To direct and apply the rotation movement of the eccentric rotor 170 to another structure, the flat plate or disc may have an irregular geometric profile including a rounded base 234 centrically aligned with the central pin aperture 230 and a straight projecting finger 236 that is offset from the central pin aperture. The projecting finger 266 can be tangentially joined to and project tangentially from the curved outer periphery 238 of the rounded base 236. The offset pin aperture 232 can be located radially opposite of the projecting finger 236 with respect to the central pin aperture 230 and can be eccentrically offset toward the curved outer periphery 238 of the rounded base 234.

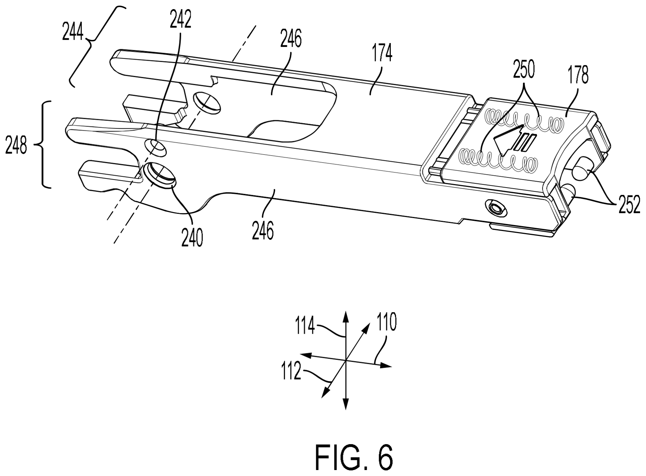

Referring to FIG. 6, there is shown an example of the pivoting lever handle 174 configured to apply an actuating force to linearly move the sliding link with respect to the card beam. To connect the lever handle 174 to the second beam end, the fixed end of the lever handle 174 can include a central pin aperture 240 that is geometrically associated with the axis of pivotal rotation that extends in the lateral direction 112. The central pin aperture 240 may be circular and can form a clearance fit enabling sliding rotation with a cylindrical pin that may be fixed to and extend laterally from the second beam end

To connect with the sliding link, the fixed end of the lever handle 174 can also include an offset pin aperture 242 that is located in an offset relation to the central pin aperture 240. The offset pin aperture 242 can be circular in shape and configured to receive and create an interference fit with a cylindrical pin oriented in the lateral direction 112. In operation, the pin retained the offset pin aperture 242 of the lever handle 174 can be slidingly received and create a clearance fit with the second oblong slot 226 of the sliding link 180 described in FIG. 4. Pivoting of the lever handle 174 about the central pin aperture 240 results in arcuate motion of the offset pin aperture 242, due to the offset relation of the two apertures, and can thereby cause linear translation or motion of the sliding link 180 connected via the second transfer joint 186 in the longitudinal direction 110.

In an example, the fixed end of the lever handle 174 can be structurally configured as a handle clevis 244 including a pair of parallel, laterally spaced apart clevis flanges 246 arranged in the vertical direction 114. The spaced apart clevis flanges 246 form a lateral gap in the lateral direction 112. In the embodiment of the card beam 152 shown in FIG. 3 wherein the second beam end 156 is configured as a structural channel, the lateral gap disposed between the clevis flanges of the handle clevis 244 can be sized to receive and slide adjacent to the parallel first and second channel flanges 190, 192. The central pin aperture 240 and the offset pin aperture 242 associated with the lever handle 174 can disposed through both of the laterally spaced clevis flanges 246 and aligned in the lateral direction 112 so that applied loads are evenly transferred to the corresponding first and second channel flanges 190, 192.

To redirect a portion of the forces applied to the lever handle 174, the fixed end can be configured with a camming structure that can engage and apply a leveraging force against a corresponding fixed structure associated with the computer chassis to forcibly move the expansion card in the vertical direction 110. For example, the camming structure can be configured as a camming jaw 248 having bifurcated fingers or prongs that are separated and spaced apart to define a slot or opening that can receive and engage an appropriate catch. When a pivoting force is applied to the free end of the latch handle 174, rotation around the central pin aperture 240 generates a corresponding degree of leverage at the camming jaws 248 with respect to a fixed structure or catch inserted there between. If the lever handle 174 includes a handle clevis 244, the camming jaws 248 can be structurally disposed in each of the two parallel clevis flanges 246.

The sliding latch 178 at the free end of the lever handle 174 can be a separate parts physically connected to slide with respect to the structure of the lever handle, for example, towards or away from the central pin aperture 240. The sliding latch 178 can have a U-shaped configuration corresponding with the shape of the handle clevis 244 and can slide with respect to tracks formed along the distal ends of the parallel pair of clevis flanges 246. The sliding latch 178 can be biased with respect to the latch handle 174 by one or more biasing spring 250. The biasing springs 250 can be coil spring disposed between the sliding latch 178 and the structure of the latch handle 174 to urge the components apart and to accommodate movement of the components together under compression.

To interact with the latch channels 158 on the card beam 152, described in FIG. 3, the sliding latch 178 includes one or more latch pegs 252 that are fixed to and extend in the lateral direction 112 from the parallel and opposed inner sides of the U-shaped structure. The latch pegs 252 can be rounded or block-shaped and are sized to make a sliding fit with the latch channels 158. To provide access for the latch pegs 252, a portion of the latch channels 158 disposed in the card beam 152 can be generally opened along the upper edges of the first and second channel flanges 190, 192.

To constrain the motion of the latch pages 252, the latch channels 158 can terminate at a three-sided channel end 254 located longitudinally opposite of and away from the second beam end 156 of the card beam 152. When the latch pegs 252 are biased toward the channel ends 254 of the latch channels 158 and away from the second beam end 156, the latch pegs become constrained by the three-sided terminal structure and secure the lever handle adjacently to the card beam. Displacing the sliding latch 178 in the opposite direction, thereby compressing the biasing springs 250, moves the latch pegs 252 away from the channel end 254 and free from the latch channels 158 to free the latch handle 174. In a possible variation, the latch channels can be located on the sliding latch and the sliding pegs can be located on the second beam end of the card beam.

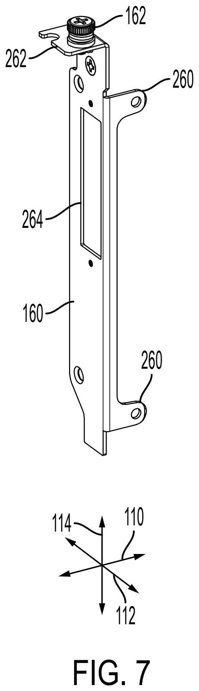

Referring to FIG. 7, there is shown an example of the edge shield 160 that can be attached to the first end of the card beam to extend adjacently along a side edge of the expansion card. The edge shield 160 can be usually oriented in the vertical direction 110 and can include one or more vertical tabs 260 that are bent along a side edge thereof to align in the longitudinal direction 110. The vertical tabs 260 may include fastener apertures to receive threaded fasteners oriented in the lateral direction 112 and that may connect with a planar side of the expansion card.

To place the securing fastener 162 in a position to engage with a fixed structure within the computer chassis, the edge shield 160 can include a horizontal shield tab 262 that is located at the upper edge of the edge shield and that is situated in the horizontal plane defined by the longitudinal and lateral directions 110, 112. The horizontal tab 262 can project longitudinally forward of the vertical extension of the edge shield 160 to locate the securing fastener 162 forwardly beyond the forward card edge of the expansion card. To provide access for external cables and connectors, there can be an access window 266 disposed into the edge shield 160 that is oriented generally in the vertical direction 114.

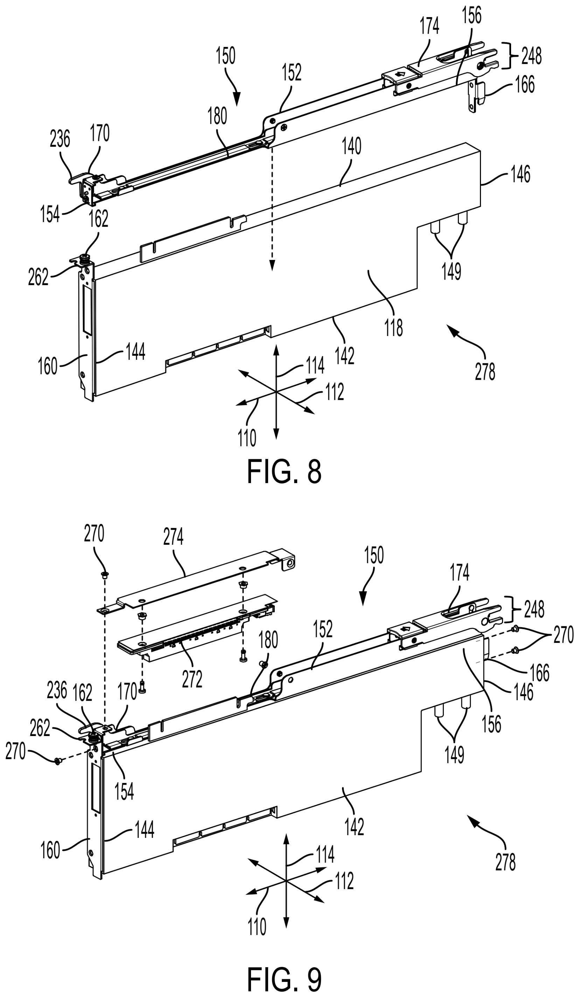

Referring to FIGS. 8 and 9, to attach the bracket assembly 150 to the expansion card 118, the elongated card beam 152 can be aligned with the linear upper card edge 140 in common respect to the longitudinal direction 110. Preferably, the longitudinal dimension between the first beam end 154 and the second beam end 156 corresponds with the length of the expansion card 118 such that the card beam 152 is coextensive with the upper card edge 140. The edge shield 160 may be attached to the forward card edge 144 of the expansion card 118 prior to attachment of the elongated card beam 152 to the upper card edge 140, although in another variation the edge shield 160 may be fixedly secured to the first beam end 154 prior to attachment to the expansion card 118.

The bracket assembly 150 therefore constrains the expansion card 118 between the forward and rearward card edges 144, 146 by the edge shield 160 descending from the first beam end 154 and the extension leg 166 vertically descending from the second beam end 156. The eccentric rotor 170 may be situated in the lateral direction 112 toward one side of the expansion card 118 and may partly extend longitudinally forward of the forward card edge 144 in the longitudinal direction 110 such that the projecting finger 236 is exposed to engage a corresponding structure in the computer chassis. The lever handle 174 is situated vertically above the upper card edge 140 in the vertical direction 114 and the camming jaws 248 may extend longitudinally rearward of the rearward card edge 146 in the longitudinal direction 110 to engage an appropriate structure.

To fix the bracket assembly 150 to the expansion card 118, threaded fasteners 270 can be inserted through the fastener apertures in the edge shield 160 adjacent to the forward card edge 144 and the extension leg 166 extending from the second beam end 156 adjacent to rearward card edge 146. The fasteners 270 may thread into appropriate holes in the forward and rearward card edges 144, 146 or may be self-tapping.

To provide additional electrical connectivity with the expansion card 118, in an example, the bracket assembly 150 can be operatively associated with a bridge connector 272. The bridge connector 272 can be an elongated edge connector or edge socket accommodating a plurality of conductive contacts or pins that can establish electrical communication with the expansion card 118. For example, the bridge connector 272 can be electrically connected to corresponding conductive traces situated along the upper card edge 140 and can communicate with adjacent components via ribbon cables or the like. To align and attach the bridge connector 272 to the upper card edge 140, the bracket assembly 150 can include a bridge flange 274 formed as a rigid metal or plastic strap that fixedly attaches to the elongated card beam 152. The bridge connector 272 may be longitudinally located toward the first beam end 154 and vertically situated between card beam 152 and the bridge flange 274.

The combination of the expansion card 118 and the fixedly attached bracket assembly150 may be referred to as expansion card assembly 278 or bracketed card assembly and can be assembled prior to and in advance of installation into the computer system.

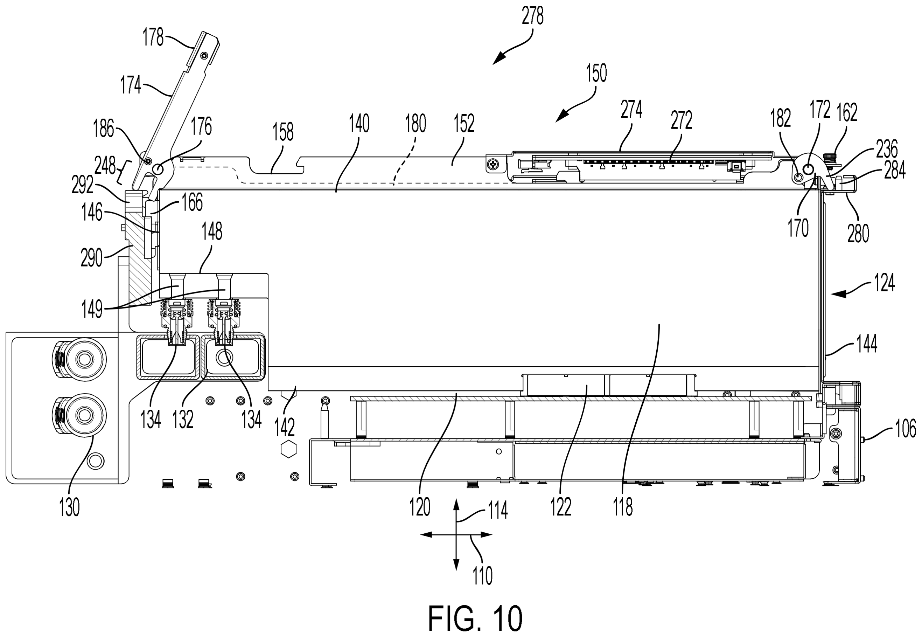

Referring to FIG. 10, to connect to the expansion board 120, the expansion card assembly 278 is vertically positioned so that the lower card edge 142 aligns with the expansion socket slots 122 in the longitudinal direction 110. The first beam end 154 is longitudinally adjacent to the front panel 106 of the computer chassis 102 such that the front card edge 144 is positioned to align with a corresponding one of the expansion bays 124. Likewise, the second beam end 156 is longitudinally situated so that the fluid ports 149 descending from the recessed card edge 148 are positioned vertically over and align with the manifold ports 134 on the fluid manifold block 132, which extends transversely in the lateral direction 112.

Prior to connection, the lever handle 174 may be pivoted upwardly from the card beam 152 about the second rotational joint 176 connecting the lever handle to the second beam end 56. The second transfer joint 186 associated with the fixed end of the lever handle 174 is therefore moved rearward in the longitudinal direction 110 with respect to the second beam end 156. The sliding link 180, also connected with the transfer joint 186 and accommodated in the card beam 152, is resultingly moved longitudinally reward in the longitudinal direction 110. At the first beam end 154, the rearward movement of the sliding link 180 pulls the first transfer joint 182 connecting the eccentric rotor 170 longitudinally rearward, thereby applying a twisting moment that rotates the eccentric rotor 170 about the first rotational joint 172. When the lever handle 174 is pivoted upward drawing the sliding link 180 longitudinally reward, the projecting finger 236 of the eccentric rotor 170 may be tilted or angled vertically downward with respect to the vertical direction 114 due to the relative offset positions of the first rotational joint 172 and the first transfer joint 182 as depicted in FIG. 10.

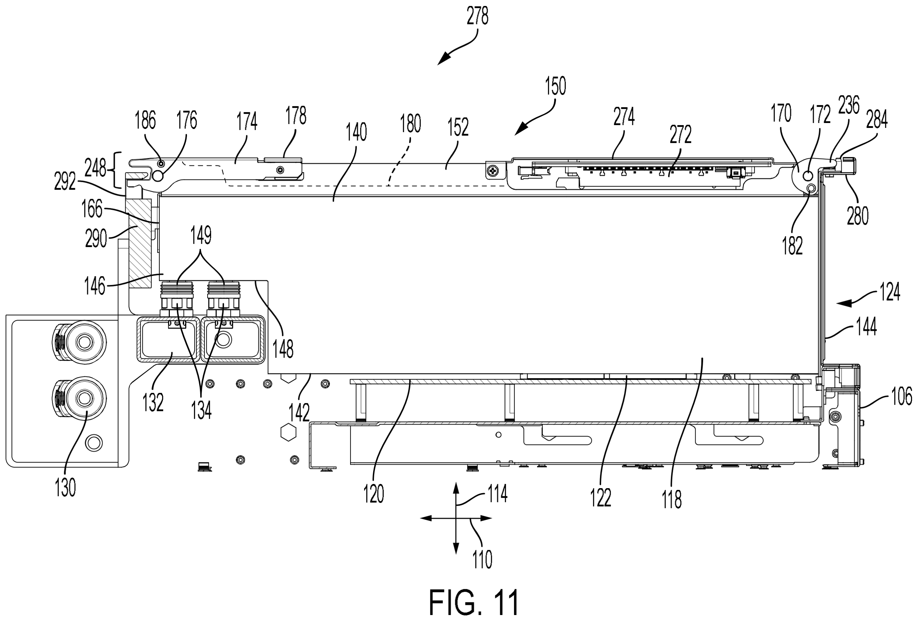

Referring to Fig. 11, to insert the lower card edge 144 into the expansion socket slots 122, the expansion card assembly 278 can be vertically lowered with respect to the expansion board 120 in the vertical direction 114. Simultaneously, an actuating force, for example, applied by hand, can be imparted to the lever handle 174 to pivot the handle about the second rotational joint 176. Rotation of the lever handle 174 with respect to the second rotational joint 176 moves the offset second transfer joint 186 forwardly in the longitudinal direction 110. The sliding link 180 attached to second transfer joint 186 concurrently moves forward in the longitudinal direction with respect to the card beam 152 and linearly displaces the offset first transfer joint 182 connected thereto. Linear motion of the first transfer joint 182 causes rotation of the eccentric rotor 170 about the first rotational joint 172.

Rotation of the eccentric rotor 170 moves the projection finger 236 on the eccentric rotor 170, previously tilted vertically downward, upward with respect to the vertical direction 114 and aligned in the longitudinal direction 110. Simultaneously, the card beam 152, attached to the eccentric rotor 170 at the first beam end 154, is free to move vertically downward to connect the lower card edge 142 with the expansion socket slot 122. Vertical downward movement of the riser card assembly 278 can be assisted by applying a downward force to the card beam 152, for example, by hand.

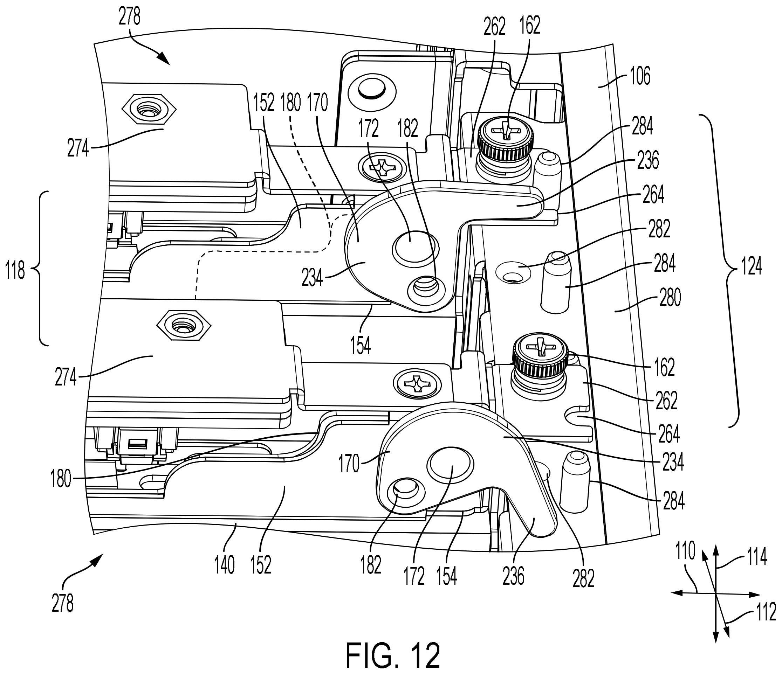

To physically interact with the rotation of the eccentric rotor 170, the computer chassis 102 can include structural features disposed in a spatially fixed relation to the front panel 106 and extending vertical over the laterally spaced parallel expansion bays 124. For example, referring to FIG. 12, the front panel 106 can include a forward ledge 280 that extends in the lateral direction 112 and that is located longitudinally forward of the forward card edge 144 of the expansion card assembly 278. The forward ledge 280 can be vertically situated even with the upper card edge 140 and the card beam attached there along. Accordingly, the projecting finger 236 extending tangentially from the eccentric rotor 170 in the longitudinal direction 110, which is connected with the first beam end 154, can extend over and make sliding contact with the forward ledge 280.

The forward ledge 280 functions as a spatially fixed abutment surface or support structure that the eccentric rotor 170 can physically contact to support and transfer loads. The front panel 106 of the chassis 102 may include other structures of different geometric shapes and arrangements to contact and interact with the eccentric rotor 170 for the transfer of forces and loads and for relative motion and displacement. The engagement structure is preferably located proximate the forward panel 106 to physically interact with the eccentric rotor 170 connected to the first beam end 154 of the bracket assembly 150.

When the eccentric rotor 170 is rotated about the first rotational joint 172 to a first position in which the projecting finger 236 is tilted vertically downward, as caused by longitudinally sliding the sliding link 180 rearward, the dimension between the distal tip of the projecting finger and the first rotational axis 172 will lift and hold up the first beam end 154 with respect to the forward ledge 280 in the vertical direction 114.

When the sliding link 180 is moved longitudinally forward with respect to the card beam 152, the eccentric rotor 170 is rotated about the first rotational joint 172 to a second position in which the projecting finger 236 is aligned in the longitudinal direction 110 and extends parallel over and can rest flatly upon the forward ledge 280. Moreover, the projecting finger 236 is vertically positioned above the first rotational joint 172 associated with the first beam end 154. Correspondingly, the card beam 152 is lowered in the vertical direction 114 relative to the forward ledge 280 on the front panel 106 and the expansion card assembly 270 is lowered with respect to the edge connector sockets 122 on the expansion board.

To secure the bracket assembly 150 with respect to the front panel 106 and prevent the expansion card assembly 278 from backing out of the expansion socket slot 122, the forward ledge 280 may include laterally spaced securing dimples 282 or divots extending in the lateral direction 112. The securing dimples 282 can numerically correspond with the expansion card assemblies 278 and can be situated in proximity underneath the horizontal shield tab 262 longitudinally extending from the upper end of the edge shield 160. When the horizontal shield tab 262 is lowered adjacent over the forward ledge 280, the securing screw 262 vertically aligns with the securing dimple 282 and can make a threaded connection therewith securing the card beam 152 to the front panel 106.

The forward ledge 280 may include additional features to assist alignment and connection of the expansion card assembly 278. For example, the forward ledge 280 can include a plurality of alignment prongs 284 that project upright in the vertical direction 114 and that are spaced along the lateral direction 112. The alignment prongs 284 may be vertically short, small cylinders and may be locationally situated proximate to the securing dimples 282. When the horizontal shield tab 262 is lowered adjacent to the forward ledge 280, the curvilinear shaped alignment notch 264 can mate with the cylindrical alignment prong 284. The mating interaction between the alignment notch 264 and the alignment prong 284 functions to align the securing fastener 262 with the securing dimples 282 and the expansion card assembly 278 with the expansion socket slots 122 underneath. The laterally spacing between the alignment prongs 284 in the lateral direction 112 can correspond to and establish the lateral pitch between the adjacent and parallel expansion cards 118.

The corresponding actions of the eccentric rotor 170 and the lever handle 174 can be reversed to eject the expansion card 118 from the expansion socket slots 122 and expansion bays 124, for example, when exchanging or swapping computer components. To eject the expansion card assembly 278, the lever handle 174 can be pivoted vertically upward from the elongated card beam 152 aligned in the longitudinal direction 110. Rotation of the lever handle 174 about the second rotational joint 176 causes the second transfer joint 186 to move reward in the longitudinal direction 110, also simultaneously pulling the sliding latch 180 connected there to reward.

Rearward motion of the sliding latch 180 responsively pulls the first transfer joint 182 associated with the eccentric rotor 170 rearward in the longitudinal direction 110 and applies a rotation moment about the first rotational joint 172 turning the eccentric rotor 170 with respect to the first beam end 154 of the card beam 152. The projecting finger 236 extending tangentially from the rounded base 234 of the eccentric rotor 170 correspondingly tilts downward in the vertical direction 114 and against the forward ledge 280. Rotation of the eccentric rotor 170 with respect to the forward ledge 280 fixed to the front panel 106 results in a vertically upward force applied across the elongated card beam 152 and lifting the expansion card 118 with respect to the expansion board 120.

Because the sliding link 180 is movably connected to the stationary card beam 152 by the sliding prismatic joints established between the sliding pegs 195 and longitudinal slots 218, the linear motion or translation of the sliding link in the longitudinal direction 110 is not transferred to the expansion card 118. The arrangement prevents shearing forces from being applied to the expansion socket slots and/or the manifold and fluid ports.

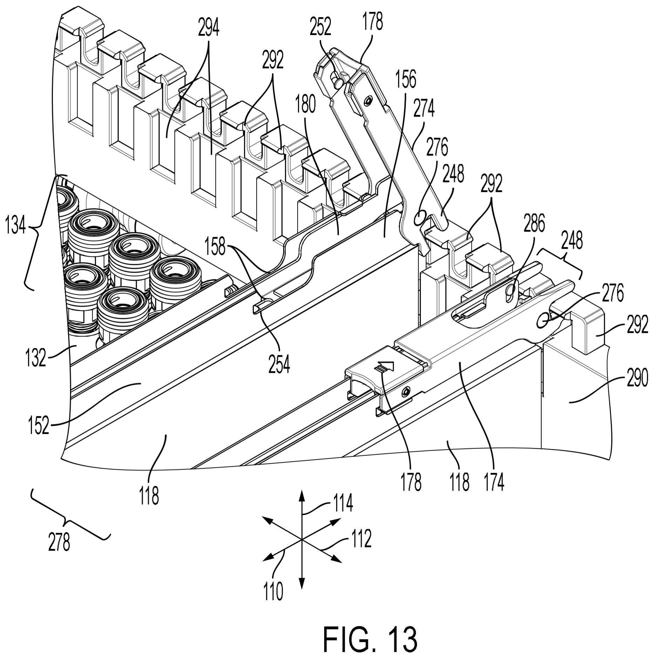

In addition to enabling vertically downward motion or upward ejecting motion of the expansion card assembly 278, pivotal movement of the lever handle 174 can also forcibly connect the fluid ports 149 with the manifold ports 134 by engagement of the camming jaws 248 with a corresponding structural camming catch disposed in the computer chassis 102. For example, referring to FIG. 13, an upright wall 290 can be associated with the fluid supply manifold 130 and can extend upright in the vertical direction 114 from the manifold block 132. The upright wall 290 may be coextensive in the lateral direction 112 with the manifold block 132 to extend across the width of the expansion board 120.

The upright wall 290 can be integrally formed with the fluid supply manifold 130 or can be a separate component attached thereto or elsewhere to the chassis 102. The upright wall 290 is preferably situated adjacent, in the longitudinal direction 110, to the rear card edge 146 during installation and can include an upper edge that may be vertically coextensive with the upper card edge 140 to interact with the bracket assembly 150 thereon. The upright wall 290 and the structural features thereon can be made of injection molded thermoplastic or machined metal.

Formed along the top edge of the upright wall 290 in the linear direction 112 can be a plurality of linearly separated rearward catches 292 configured to interact with the camming jaws 248 of the lever handle 174. For example, the rearward catches 292 can be arch or bridge shaped structures that define an opening in the longitudinal direction 110 that can receive the lower prong of the camming jaws 248. The arch-like shape of the rearward catch 292 can be received between the bifurcated camming jaw 248.

In an embodiment, to align the camming jaws 248 with the rearward catches 292, the upright wall 290 can have a plurality of alignment notches 294 disposed therein that are spaced apart in the lateral direction 112. The alignment notches 294 may be located laterally between adjacent pairs of the rearward catches 292 and extend downward in the vertical direction 114 from the upper edges of the upright wall 290. The alignment notches 294 can be sized to receive and fit with the extension legs 166 extending downward from second beam end 154 and adjacent the rearward card edge 146. Accordingly, when the riser card assembly 270 is installed in the chassis volume 104, interaction of the extension legs 166 and the alignment notches 294 aligns the expansion card in the longitudinal direction 110 with, for example, the expansion socket slots 122 and the expansion bays 124.

Thereafter, pivoting the lever handle 174 vertically downward with respect to the first rotational joint 172 pivotally moves the camming jaws 248 upwardly in the opposite direction, and brings the jaws into physical contact with arch-shaped rearward catch 292. Because the rearward catch 292 is fixed in position with respect to the vertical direction 114, pivotal rotation of the camming jaws 248 creates a downward force applied to the card beam 152 attached along the upper card edge 140. Hence, further articulation of the lever handle 174 applies a downward force to the riser card assembly 278 moving expansion card 118 perpendicularly toward the expansion board 120 situated in the horizontal plane 116.

Pivoting the lever handle 174 to apply the camming jaws 248 against the rearward catches 292 also moves in the vertical direction 114 the fluid ports 149 descending from the recessed card edge 148 toward the manifold ports 134 projecting upwards from the manifold block 134. The distance between the distal end of the lever handle 174 and the second rotational joint 176 about which the pivotal motion occurs generates a mechanical advantage and applies leverage to the interaction between the camming jaws 248 and the rearward catches 292.

The increased force is also applied to downward motion of the recessed card edge 248 toward the manifold block 132. The mechanical advantage created by the lever handle 174 pivoting the camming jaws 248 against the reward catches 292 enables forcible insertion of the fluid ports 149 into the manifold ports 134 resulting fluid tight connections with relatively low force input. For example, the dimensions of the lever handle 174 with respect to the second rotational joint 176 can be arranged to generate and apply a vertically downward force at the recessed card edge 148 on the order of 10 kilograms.

To secure the lever handle 174 adjacently to the card beam 152 and maintain the vertically downward force connecting the manifold ports 134 and fluid ports 149, the sliding latch 178 can translate to interact with the latch channels 158 disposed in the first and second channel flanges 190, 192. For example, when the lever handle 174 is parallel with the card beam 152, the spring biased sliding latch 178 can move in the longitudinal direction 110 so that that latch pegs located thereon are received and constrained at the channel ends 254 of the latch channels 158. To release and pivot the lever handle 150 apart from the card beam 152, the sliding latch 178 is moved rearward in the longitudinal direction freeing the latch pegs from the latch channels 158. The downward force applied in the vertical direction 114 to the recessed card edge 148 is likewise release so that the manifold ports 134 and fluid ports 149 can be disconnected.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A bracket assembly for connecting an expansion card to an expansion board in a computer chassis comprising:
a card beam elongated in a longitudinal direction between a first beam end and a second beam end, the card beam adapted to attach to an upper edge of the expansion card;
a sliding link coextending with the card beam in the longitudinal direction between a first link end and a second link end;
an eccentric rotor rotationally connected to the first beam end and connected to the first link end to rotate the eccentric rotor; and
a lever handle pivotally connected to the second beam end and connect to the second link end to linearly translate the sliding link.

2. The bracket assembly of claim 1, wherein the eccentric rotor is connected to the first beam end by a first rotational joint and is connected to the first link end by a first transfer joint.

3. The bracket assembly of claim 2, comprising at least one of the following features:
- The first transfer joint is offset from the first rotational joint.
- The first rotational joint is a pin joint and the first transfer joint is a pin-in-slot joint.

4. The bracket assembly of one of the preceding claims, wherein the lever handle is connected to the second beam end by a second rotational joint and is connected to the second link end by a second transfer joint.

5. The bracket assembly of claim 4, comprising at least one of the following features:
- The second transfer joint is offset from the second rotational joint.
- The second rotational joint is a pin joint and the second transfer joint is a pin-in-slot joint.

6. The bracket assembly of one of the preceding claims, wherein the card beam and the sliding link are connected by one or more prismatic sliding joints.

7. The bracket assembly of claim 6, wherein the prismatic sliding joint comprises a longitudinal slot on one of the card beam and the sliding link that receives a sliding peg on the other of the card beam and the sliding link.

8. The bracket assembly of one of the preceding claims, wherein the eccentric rotor comprises a projecting finger adapted for sliding contact with a fixed support structure of the computer chassis.

9. The bracket assembly of one of the preceding claims, wherein the lever handle comprises a camming structure adapted for engaging a fixed catch of the computer chassis to displace the bracket assembly in a vertical direction orthogonal to the longitudinal direction.

10. The bracket assembly of claim 9, wherein the camming structure is a bifurcated camming jaw.

11. The bracket assembly of one of the preceding claims, wherein the lever handle comprises a sliding latch adapted to releasably engage a latch channel on the card beam.

12. A method of installing an expansion card to an expansion board in a computer chassis comprising:
attaching a bracket assembly to an upper card edge of an expansion card such that a card beam of the bracket assembly extends longitudinally between a forward card edge and a rearward card edge of the expansion card;
aligning a lower card edge of the expansion card with an expansion socket slot on the expansion board;
aligning a fluid port on the expansion card with a manifold port associated with a fluid supply manifold in the computer chassis;
lowering the lower card edge vertically into the expansion socket slot by rotating an eccentric rotor connected to the bracket assembly with respect to a fixed support structure of the computer chassis; and
forcibly connecting the fluid port to the manifold port by pivoting a lever handle pivotally connected to the card beam to engage a camming structure with a camming catch fixed in relation to the fluid supply manifold.

13. The method of claim 12, comprising at least one of the following features:
- The lever handle and the eccentric rotor are interconnected by a sliding link longitudinally coextending with the card beam.
- The lever handle and the eccentric rotor are interconnected by a sliding link longitudinally coextending with the card beam, wherein the lower card edge is lifted from the expansion socket slot by rotating the eccentric rotor with respect to the fixed support structure.
- The lever handle and the eccentric rotor are interconnected by a sliding link longitudinally coextending with the card beam, wherein the lower card edge is lifted from the expansion socket slot by rotating the eccentric rotor with respect to the fixed support structure and wherein the fluid port is forcibly disconnected from the manifold port by pivoting the lever handle to disengage the camming structure with the camming catch.

14. A computer system comprising:
an expansion board comprising an expansion socket slot and located in a horizontal plane aligned in a computer chassis;
a fluid supply manifold located in the horizontal plane and having one or more manifold port oriented in a vertical direction orthogonal to the horizontal plane;
an expansion card assembly comprising:
an expansion card having an upper card edge orientable in a longitudinal direction parallel to the horizontal plane, a lower card edge insertable in the expansion socket slot, and one or more fluid ports orientable in the vertical direction; and
a bracket assembly comprising:
a card beam extending horizontally between a first beam end and a second beam end and attached along the upper card edge;
a sliding link coextending with the card beam;
an eccentric rotor rotatably connected to first beam end and connected to the sliding link to rotate the eccentric rotor with respect to fixed support structure of the computer chassis; and
a lever handle pivotally connected to the second beam end and connected to sliding link for movement with respect to the card beam.

15. The computer system of claim 14, comprising at least one of the following features:
- The eccentric rotor comprises a projecting finger adapted for sliding contact with the fixed support structure of the computer chassis.
- The lever handle comprises a camming jaw adapted to engage a camming catch fixed in relation to the fluid supply manifold to produce a force in the vertical direction.
